**Europäisches Patentamt**

**European Patent Office**

**Office européen des brevets**

(19)

(11) Veröffentlichungsnummer : **0 378 779 B1**

(12) # EUROPÄISCHE PATENTSCHRIFT

(45) Veröffentlichungstag der Patentschrift :
**15.04.92 Patentblatt 92/16**

(51) Int. Cl.⁵ : **A01D 45/02**

(21) Anmeldenummer : **89121384.5**

(22) Anmeldetag : **18.11.89**

(54) Erntegerät zum Ernten von Mais.

(30) Priorität : **16.01.89 DE 3901069**
**14.09.89 DE 3930777**

(43) Veröffentlichungstag der Anmeldung :
**25.07.90 Patentblatt 90/30**

(45) Bekanntmachung des Hinweises auf die
Patenterteilung :
**15.04.92 Patentblatt 92/16**

(84) Benannte Vertragsstaaten :
**AT BE DE FR GB IT NL**

(56) Entgegenhaltungen :
**AT-B- 307 784**
**DE-A- 2 549 136**
**DE-A- 3 213 542**

(56) Entgegenhaltungen :
**DE-A- 3 433 444**
**DE-A- 3 619 691**
**US-A- 3 207 163**
**US-A- 3 304 702**

(73) Patentinhaber : **CLAAS OHG**
**Postfach 1140 Münsterstrasse 31**
**W-4834 Harsewinkel- 1 (DE)**

(72) Erfinder : **Ostrup, Heinrich, Dipl.-Ing.**
**Leipzigerstrasse 35**
**W-4834 Harsewinkel (DE)**
Erfinder : **Sanders, Lambert, Dipl.-Ing.**
**Sprockenbrink 9**
**W-4836 Herzebrock/-Clarholz (DE)**
Erfinder : **Dudler, Heribert, Dipl.-Ing.**
**Bremer Strasse 4**
**W-4834 Harsewinkel (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 378 779 B1

# EP 0 378 779 B1

## Beschreibung

Die Erfindung betrifft ein Erntegerät zum Ernten von Mais oder anderen Körnerfrüchten, welches insbesondere als Vorsatzgerät für einen Mähdrescher ausgebildet ist und mit einer Einzugsvorrichtung und einem Pflückspalt zur Trennung von Kolben von der Pflanze, wobei das Erntegerät je Pflanzenreihe eine angetriebene Pflückwalze aufweist, die im wesentlichen aus einem zylindrischen Grundkörper besteht, auf dessen Mantel in gleichmäßigem Umfangsabstand zueinander Schlagplatten aufgesetzt sind, welche Einschnitte für den Durchtritt einer am Erntegerät befestigten Messerschar aufweist und wobei der Pflückwalze ein Gegenhalter zugeordnet ist.

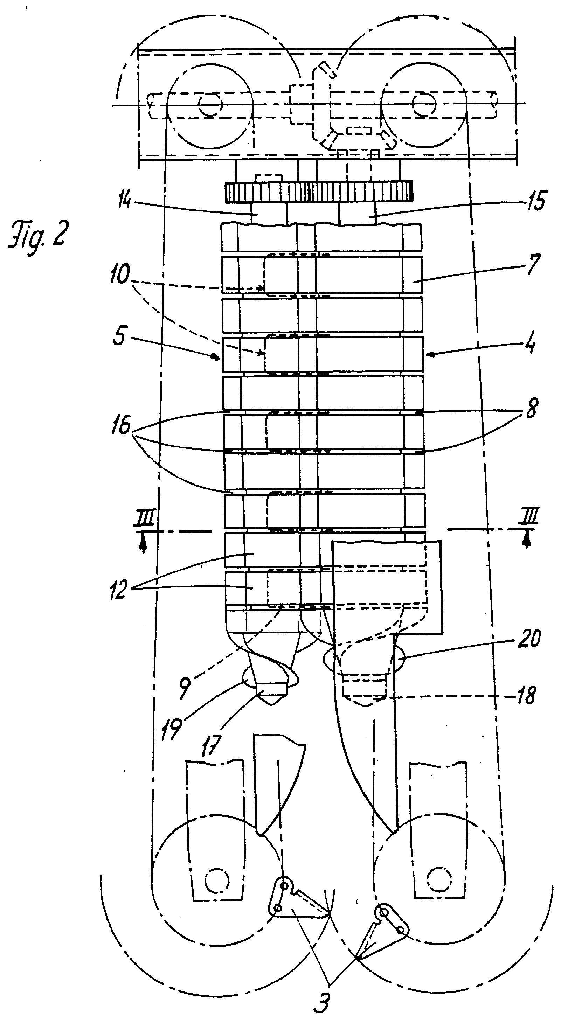

Ein solches Erntegerät ist beispielsweise aus der DE-A-36 19 691 bekannt. Dabei besteht der Gegenhalter aus einem wannenförmig gebogenen Blech, welches die Pflückwalze auf ihrer gesamten Länge teilweise umgreift. Die Teilummantelung dient als Leitblech für die Stengel, die von der Walze erfaßt nach unten gezogen und durch feststehende Messer verkleinert werden. Es hat sich in der Praxis gezeigt, daß die Stengel häufig nicht sicher erfaßt und durchgezogen werden. Außerdem wirkt das als Teilummantelung dienende wannenförmig gebogene Blech als Reibbremse, die einerseits Energie kostet, andererseits aber bewirkt, daß Stengelteile abgerissen und aufgrund der Bremswirkung zurückgehalten werden. Diese gelangen dann anstatt auf den Acker in das Dreschsystem. Der vorliegenden Erfindung liegt daher die Aufgabe zugrunde, ein Erntegerät der eingangs näher bezeichneten Art zu schaffen, daß unter allen Erntebedingungen ein sicheres Ergreifen und einen sicheren Durchzug von zu zerkleinernden Stengelteilen gewährleistet. Diese Aufgabe wird dadurch gelöst, daß der Gegenhalter eine achsparallel zur Pflückwalze verlaufende angetriebene Walze ist, die aus einem Grundkörper mit mehreren mit Abstand zueinander angeordneten auf den Grundkörper aufgesetzten Segmenten besteht, wobei beiden Walzen eine gemeinsame Messerschar zugeordnet ist, deren Messer gleichzeitig sowohl in die Zwischenräume zwischen den einzelnen Segmenten wie auch in die Einschnitte der Schlagplatten eingreifen. Die Eingriffstiefe der Messer in die Einschnitte beider Walzen erfolgt nach der Art und Weise, wie sie in dem Hauptmerkmal der DE-A-36 10 141 der Anmelderin beschrieben ist. Dabei ist es zweckmäßig, daß der Abstand der beiden Walzenachsen zueinander kleiner ist als die Addition der beiden Hüllkreisradien von Pflückwalze und Gegenwalze. Hierdurch wird erreicht, daß beide Walzen miteinander kämmen und somit einen hohen Wirkungsgrad erzielen. Es hat sich als vorteilhaft herausgestellt, wenn jedes Segmentteil mindestens drei Flügel aufweist, deren freiauslaufenden einzugswirksamen Flügelteile entgegen der Drehrichtung bogenförmig nach hinten geneigt verlaufen. Durch eine solche Ausbildung der Flügel werden die Stengel in Richtung Pflückwalze gedrückt und können einwandfrei zerkleinert werden. Nach einem weiteren Merkmal der Erfindung weisen sowohl die Pflückwalze wie auch die Gegenwalze je eine vordere konische mit Schneckenblechen besetzte Spitze auf, wodurch der Einzug bzw. die Annahme der Stengel eindeutig verbessert wird. Die Erfindung sieht des weiteren vor, daß der Durchmesser des Hüllkreises der Gegenwalze kleiner ist als der Durchmesser des Hüllkreises der Pflückwalze. Auf vorteilhafte Weise verläuft die senkrechte Mittelebene zwischen Pflückwalze und Gegenwalze seitenversetzt zur senkrechten Mittelebene des Pflückspaltes. Die Messerschar ist auf einem gemeinsamen Träger angeordnet und kann bedarfsweise verschwenkt werden, um die Häckselwirkung auszuschalten (Fig. 2 gestrichelte Messerposition). Nach einem weiteren wesentlichen Merkmal der Erfindung weist die Pflückwalze 4 Schlagplatten und die Gegenwalze 6 Flügel auf, wobei die Gegenwalze mit höherer Drehzahl angetrieben wird als die Pflückwalze. Als vorteilhaftes Drehzahlverhältnis von Gegenwalze zur Pflückwalze hat sich das Verhältnis 4 zu 3 herausgestellt. Bei diesem Drehzahlverhältnis greifen nämlich stets in den Bereich, in dem sich die Hüllkreise von Gegenwalze und Pflückwalze überschneiden zwei Flügel der Gegenwalze in den Zwischenraum zweier Schlagplatten der Pflückwalze ein. Hierdurch wird ein absolut sicheres Erfassen des Stengelgutes und ein festes Andrücken des Stengelgutes an die Pflückwalze erreicht. Um zu vermeiden, daß sich Stengelgut im Bereich der frei auslaufenden Messer zwischen diesen und dem Grundkörper der Gegenwalze bzw. dem Grundkörper der Pflückwalze verfängt, sind die Messer im frei auslaufenden Bereich dem Radius des Grundkörpers der Gegenwalze bzw. dem Radius des Grundkörpers der Pflückwalze angepaßt. Außerdem schlägt die Erfindung vor, den Halter für die Messerschar bzw. die Messer nach außen seitenversetzt zum Grundkörper der Gegenwalze anzuordnen, um jegliche Kollision mit Stengelgut zu vermeiden. Da hierbei längere Messer erforderlich sind empfiehlt die Erfindung, jedes Messer mit einer Versteifungssicke zu versehen, um Schwingungen zu vermeiden.

Im folgenden soll die Erfindung anhandes eines Ausführungsbeispieles und mehrerer dieses schematisch darstellender Figuren naher erläutert werden. Dabei zeigt:

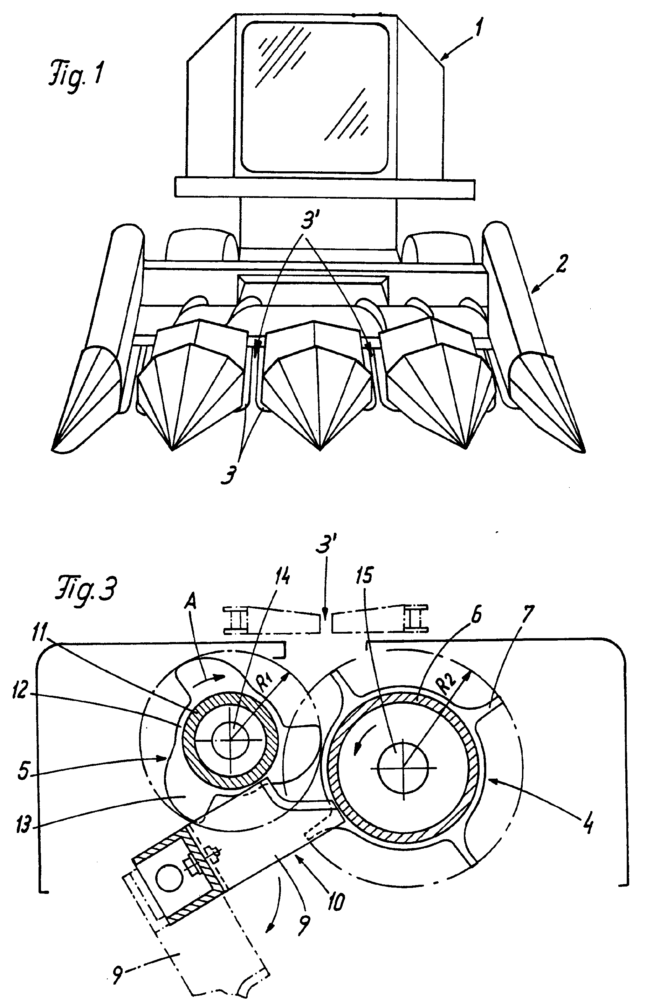

Fig. 1 ein Erntegerät mit einem Maispflücker von vorn,

Fig. 2 die Draufsicht auf eine Pflückwalze mit zugeordneter Gegenwalze,

Fig. 3 eine Darstellung gemäß der Schnittstelle III-III in Fig. 2,

Fig. 4 eine Darstellung gemäß Fig. 3 in abgewandelter Form,

Fig. 5 einen Teil der Darstellung gemäß Fig. 4 in vergrößerter Darstellung und

Fig. 6 eine Schnittdarstellung gemäß der Linie VI-VI in Fig. 4.

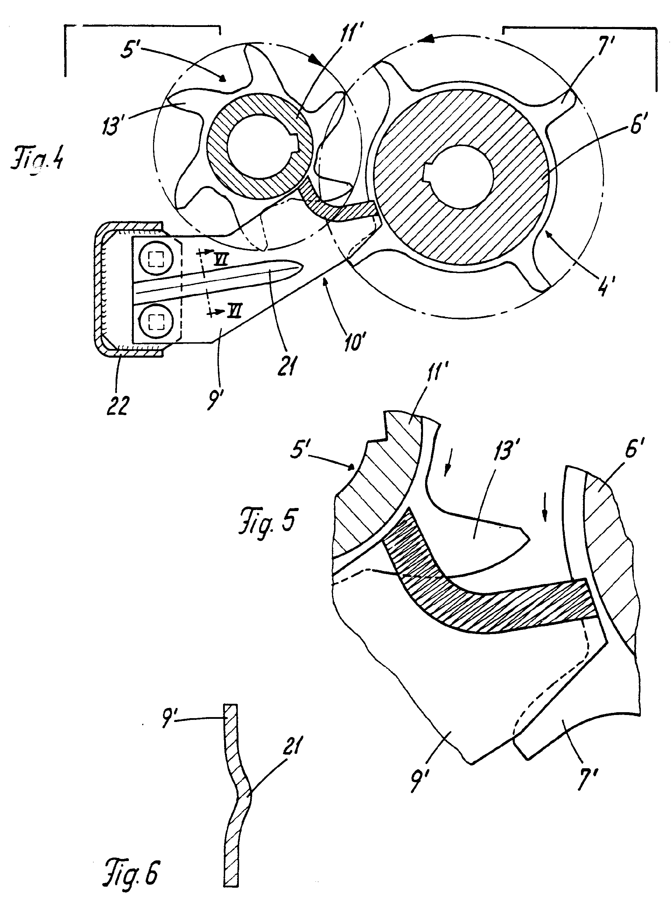

Mit 1 ist ein Mähdrescher mit frontseitigem Maispflücker 2 bezeichnet. Dieser Maispflücker 2 weist vier Reihen von Förderkettenpaaren 3 auf, die die nicht dargestellten Maisstengel einziehen. Unterhalb eines jeden Förderkettenpaares 3 sind achsparallel zueinander eine Pflückwalze 4 sowie eine Gegenwalze 5 antreibbar gelagert. In an sich bekannter Weise besteht dabei die Pflückwalze 4 aus einem zylindrischen Grundkörper 6, auf den am Umfang gleichmäßig verteilt Schlagplatten 7 aufgesetzt sind. Diese sind mit Einschnitten 8 versehen, in die die Messer 9 einer Messerschar 10 eingreifen. Die Gegenwalze 5 ist oberhalb der Messerschar 10 angeordnet. Auch sie besteht aus einem zylindrischen Grundkörper 11, auf den mit Zwischenräumen 16 zueinander in Achsrichtung mindestens dreiflügelige Segmente 12 aufgesetzt sind. Die Flügel 13 dieser Segmente 12 verlaufen bogenförmig und sind entgegen der durch den Pfeil A gekennzeichneten Drehrichtung nach hinten geneigt, wodurch die Stengel in Richtung der Pflückwalze gedrückt werden. Wie die Fig. 3 erkennen läßt, ist der Abstand der Walzenachsen 14 und 15 zueinander kleiner als die Addition der Hüllradien R 1 und R 2, so daß unter allen Umständen durch ständigem Formschluß zwischen den Walzen und dem Erntegut ein sicherer Durchzug der Stengel erfolgt.

Die Fig. 2 zeigt, daß beide Walzen 4 und 5 vorne eine konische Spitze 17 bzw. 18 aufweisen, die mit Schneckenblechen 19 und 20 besetzt sind, wodurch der Einzug bzw. die Stengelannahne verbessert wird.

In einer zu Fig. 3 abgewandelten Form zeigt die Fig. 4 eine Gegenwalze 5' mit sechs Flügeln 13' wobei das Drehzahlverhältnis von Gegenwalze 5' zur Pflückwalze 4' vier zu drei beträgt. Dies bedeutet, daß in dem Bereich, in welchem sich die Hüllkreise von Gegenwalze und Pflückwalze überschneiden, stets zwei Flügel 13' der Gegenwalze 5' in den Zwischenraum zweier benachbarter Schlagplatten 7' der Pflückwalze 4' eingreifen, wodurch ein noch sicherer Andruck der zu zerkleinernden Stengel in Richtung Pflückwalze erreicht wird. Weiterhin lassen die Fig. 4 und 5 erkennen, daß die Messer 9' in ihrem vorderen Bereich dem Radius des Grundkörper 11' angepaßt sind. Damit wird verhindert, daß sich selbst bei widrigen Ernteverhältnissen Stengelgut zwischen dem Grundkörper 11' und den frei auslaufenden Bereichen der Messer 9' einklemmen kann. Bedarfweise können die Messer 9' selbstverständlich auch im Bereich des Grundkörpers 6' der Pflückwalze 4' dem Radius des Grundkörpers 6' angepaßt sein.

Um zu vermeiden, daß Stengelgut mit dem Kalter 22 für die Messerschar 10' kollidiert, ist dieser zum Grundkörper 11' der Gegenwalze 5' seitenversetzt und zwar deutlich weiter als bei der Ausführung gemäß Fig. 3. Bei einem so großen Versatz sind folglich entsprechend längere Messer 9' einzusetzen. Um zu verhindern, daß diese Messer in Vibration geraten, ist in jedes Messer eine Sicke 21 eingedrückt, durch die die Messer verstärkt und stabilisiert werden.

**Patentansprüche**

1. Erntegerät zum Ernten von Mais oder anderen Körnerfrüchten, welches insbesondere als Vorsatzgerät für einen Mähdrescher ausgebildet ist und mit einer Einzugsvorrichtung und einem Pflückspalt zur Trennung der Kolben von der Pflanze, wobei das Erntegerät je Pflanzenreihe eine angetriebene Pflückwalze (4,4') aufweist, die im wesentlichen aus einem zylindrischen Grundkörper (6,6') besteht, auf dessen Mantel in gleichmäßigem Umfangsabstand zueinander Schlagplatten (7,7') aufgesetzt sind, welche Einschnitte (8) für den Durchtritt einer am Erntegerät befestigten Messerschar (10,10') aufweist und wobei der Pflückwalze (4,4') ein Gegenhalter zugeordnet ist,
**dadurch gekennzeichnet,**
daß der Gegenhalter eine achsparallel zur Pflückwalze (4,4') verlaufende angetriebene Walze (5,5') ist, die aus einem Grundkörper (11,11') mit mehreren mit Abstand zueinander angeordneten auf den Grundkörper (11) aufgesetzten Segmenten (12) besteht, wobei beiden Walzen (4,4' und 5,5') eine gemeinsame Messerschar (10,10') zugeordnet ist, deren Messer (9,9') gleichzeitig sowohl in die Zwischenräume (16) zwischen den einzelnen Segmenten (12) wie auch in die Einschnitte (8) der Schlagplatten (7,7') eingreifen.

2. Erntegerät nach Anspruch 1,
**dadurch gekennzeichnet,**
daß der Abstand der beiden Walzenachsen (14 und 15) zueinander kleiner ist als die Addition der beiden Hüllkreisradien (R 1) und (R 2) von Pflückwalze (4) und Gegenwalze (5).

3. Erntegerät nach den Ansprüchen 1 und 2,
**dadurch gekennzeichnet,**
daß jedes Segment (12) mindestens drei Flügel (13) aufweist, deren freiauslaufenden einzugswirksamen Flügelteile entgegen der Drehrichtung (Pfeil A) bogenförmig nach hinten geneigt verlaufen.

4. Erntegerät nach den Ansprüchen 1 bis 3,
**dadurch gekennzeichnet,**

daß sowohl die Pflückwalze (4) wie auch die Gegenwalze (5) je eine vordere konische mit Schneckenblechen (19 und 20) besetzte Spitze (17 und 18) aufweisen.

5. Erntegerät nach den Ansprüchen 1 bis 4,
**dadurch gekennzeichnet,**
daß der Durchmesser des Hüllkreises der Gegenwalze (5) kleiner ist als der Durchmesser des Hüllkreises der Pflückwalze (4).

6. Erntegerät nach den Ansprüchen 1 bis 5,
**dadurch gekennzeichnet,**
daß die senkrechte Mittelebene zwischen Pflückwalze (4) und Gegenwalze (5) seitenversetzt zur senkrechten Mittelebene des Pflückspaltes (3') verläuft.

7. Erntegerät nach den Ansprüchen 1 bis 6,
**dadurch gekennzeichnet,**
daß die Pflückwalze (4') vier Schlagplatten (7') und die Gegenwalze (5') sechs Flügel (13') aufweist.

8. Erntegerät nach den Ansprüchen 1 bis 7,
**dadurch gekennzeichnet,**
daß die Gegenwalze (5') mit höherer Drehzahl angetrieben wird als die Pflückwalze (4').

9. Erntegerät nach den Ansprüchen 1 bis 8,
**dadurch gekennzeichnet,**
daß das Drehzahlverhältnis von Gegenwalze (5') zur Pflückwalze (4') vier zu drei beträgt.

10. Erntegerät nach den Ansprüchen 1 bis 9,
**dadurch gekennzeichnet,**
daß die Messer 9' in ihrem freiauslaufenden Bereich dem Radius des Grundkörpers (11') der Gegenwalze (5') angepaßt sind.

11. Erntegerät nach den Ansprüchen 1 bis 10,
**dadurch gekennzeichnet,**
daß die Messer (9') in ihren freiauslaufenden Bereichen dem Radius des zylindrischen Grundkörpers (6') der Pflückwalze (4') angepaßt sind.

12. Erntegerät nach den Ansprüchen 1 bis 11,
**dadurch gekennzeichnet,**
daß jedes Messer (9') eine Versteifungssicke (21) aufweist.

13. Erntegerät nach den Ansprüchen 1 bis 12,
**dadurch gekennzeichnet,**
daß der Halter (22) für die Messerschar (10') bzw. für die Messer (9') seitenversetzt nach außen zum Grundkörper (11') angeordnet ist.

**Claims**

1. A harvesting device for harvesting maize or other cereal products, which is in particular in the form of an attachment for a combine harvester, and comprising an intake device and a picking gap for the separation of cobs from the plant, wherein for each row of plants the harvesting device has a respective driven picking roller (4, 4') which substantially comprises a cylindrical main body (6, 6'), on the surface of which at uniform peripheral spacings from each other are disposed striker plates (7, 7') which have slots (8) for the passage therethrough of a blade array (10, 10') fixed to the harvesting device, and wherein associated with the picking roller (4, 4') is a counter-holder device,
characterised in that
the counter-holder device is a driven roller (5, 5') which extends in axis-parallel relationship with respect to the picking roller (4, 4') and which comprises a main body (11, 11') with a plurality of segments (12) which are arranged at spacings relative to each other and which are fitted on to the main body (11), wherein associated with both rollers (4, 4' and 5, 5') is a common blade array (10, 10') in which the blades (9, 9') simultaneously engage both into the intermediate spaces (16) between the individual segments (12) and also into the slots (8) in the striker plates (7, 7').

2. A harvesting device according to claim 1
characterised in that
the spacing of the axes (14 and 15) of the two rollers relative to each other is smaller than the adition of the two envelope circle radii (R1) and (R2) of the picking roller (4) and the counter-roller (5).

3. A harvesting device according to claims 1 and 2
characterised in that

each segment (12) has at least three vanes (13) whose vane portions which terminate freely and which are operative to produce an intake action extend inclinedly in an arcuate configuration rearwardly in opposite relationship to the direction of rotation (arrow A).

4. A harvesting device according to claims 1 to 3

characterised in that

both the picking roller (4) and the counter-roller (5) each have a front conical tip (17 and 18) which is fitted with screw plate portions (19 and 20).

5. A harvesting device according to claims 1 to 4

characterised in that

the diameter of the envelope circle of the counter-roller (5) is smaller than the diameter of the envelope circle of the picking roller (4).

6. A harvesting device according to claims 1 to 5

characterised in that

the perpendicular central plane between the picking roller (4) and the counter-roller (5) extends in laterally displaced relationship to the perpendicular central plane of the picking gap (3').

7. A harvesting device according to claims 1 to 6

characterised in that

the picking roller (4') has four striker plates (7') and the counter-roller (5') has six vanes (13').

8. A harvesting device according to claims 1 to 7

characterised in that

the counter-roller (5') is driven at a higher speed of rotation than the picking roller (4').

9. A harvesting device according to claims 1 to 8

characterised in that

the rotary speed ratio of the counter-roller (5') to the picking roller (4') is four to three.

10. A harvesting device according to claims 1 to 9

characterised in that

the blades (9') are adapted in their freely terminating region to the radius of the main body (11') of the counter-roller (5').

11. A harvesting device according to claims 1 to 10

characterised in that

in their freely terminating regions the blades (9) are adapted to the radius of the cylindrical main body (6') of the picking roller (4').

12. A harvesting device according to claims 1 to 11

characterised in that

each blade (9') has a stiffening bead (21).

13. A harvesting device according to claims 1 to 12

characterised in that

the holder (22) for the blade array (10') or for the blades (9') is arranged in laterally displaced relationship outwardly relative to the main body (11').

**Revendications**

1. Dispositif de récolte destiné à la récolte de maïs et autres grains, constitué en particulier en tant que dispositif rapporté d'une moissonneuse-batteuse et comprenant un dispositif d'alimentation et un interstice de cueillette pour séparer les épis des plantes, le dispositif de récolte comprenant pour chaque rangée de plantes un cylindre de cueillette (4, 4') entraîné constitué essentiellement par un corps de base (6, 6') cylindrique sur l'enveloppe duquel sont montées des plaques de battage (7, 7') espacées régulièrement et comprenant des découpes pour le passage d'un groupe de couteaux (10, 10') fixé au dispositif de récolte et un contre-support (4, 4') étant associé au cylindre de cueillette,

caractérisé en ce que

le contre-support est un cylindre (5, 5') entraîné dont l'axe est parallèle à celui du cylindre de cueillette (4, 4'), qui est constitué par un corps de base (11, 11') avec plusieurs segments (12) montés à une certaine distance les uns des autres sur le corps de base (11), un groupe de couteaux commun (10, 10') étant associé aux deux cylindres (4, 4' et 5, 5'), dont les couteaux (9, 9') pénètrent simultanément aussi bien dans les interstices (16) entre les segments individuels (12) que dans les découpes (8) des plaques de battage (7, 7').

2. Dispositif de récolte selon la revendication 1,

caractérisé en ce que

la distance entre les deux axes (14 et 15) des cylindres est plus faible que l'addition des deux rayons (R1 et R2) des cercles d'enveloppe du cylindre de cueillette (4) et du contre-cylindre (5).

3. Dispositif de récolte selon les revendications 1 et 2,
caractérisé en ce que
chaque segment (12) comprend au moins trois ailes (13) dont les parties en saillie libre qui déterminent l'entraînement sont inclinées vers l'arrière en forme d'arc à l'encontre de la direction de la rotation (flèche A).

4. Dispositif de récolte selon les revendications 1 à 3,
caractérisé en ce que
le cylindre de cueillette (4) aussi bien que le contre-cylindre (5) comprennent chacun une pointe conique avant (17 et 18) avec des tôles en spirale (19 et 20).

5. Dispositif de récolte selon les revendications 1 à 4,
caractérisé en ce que
le diamètre du cercle d'enveloppe du contre-cylindre (5) est plus petit que le diamètre du cercle d'enveloppe du cylindre de cueillette (4).

6. Dispositif de récolte selon les revendications 1 à 5,
caractérisé en ce que
le plan médian vertical entre le cylindre de cueillette (4) et le contre-cylindre (5) est décalé latéralement par rapport au plan médian vertical de l'interstice de cueillette (3').

7. Dispositif de récolte selon les revendications 1 à 6,
caractérisé en ce que
le cylindre de cueillette (4') comprend quatre plaques de battage (7') et le contre-cylindre (5') six ailes (13').

8. Dispositif de récolte selon les revendications 1 à 7,
caractérisé en ce que
le contre-cylindre (5') est entraîné à une vitesse de rotation plus élevée que le cylindre de cueillette (4').

9. Dispositif de récolte selon les revendications 1 à 8, caractérisé en ce que le rapport entre la vitesse de rotation du contre-cylindre (5') et du cylindre de cueillette (4') est de quatre à trois.

10. Dispositif de récolte selon les revendications 1 à 9,
caractérisé en ce que
les couteaux (9') sont adaptés dans leur région en saillie libre au rayon du corps de base (11') du contre-cylindre (5').

11. Dispositif de récolte selon les revendications 1 à 10,
caractérisé en ce que
les couteaux (9') sont adaptés dans leurs régions en saillie libre au rayon du corps de base cylindrique (6') du cylindre de cueillette (4').

12. Dispositif de récolte selon les revendications 1 à 11,
caractérisé en ce que
chaque couteau (9') comprend une moulure de rigidification (21).

13. Dispositif de récolte selon les revendications 1 à 12,
caractérisé en ce que
le support (22) du groupe de couteaux (10') ou des couteaux (9') est décalé latéralement vers l'extérieur par rapport au corps de base (11').

*Fig. 1*

*Fig. 3*

Fig. 2

Fig. 4

Fig. 5

Fig. 6